# EUROPÄISCHE PATENTSCHRIFT

(11) **EP 3 943 239 B1**
(45) Veröffentlichungstag und Bekanntmachung des Hinweises auf die Patenterteilung: **30.08.2023**
(21) Anmeldenummer: 21163345.8
(22) Anmeldetag: 18.03.2021
(51) Int. Cl.: B23Q 39/04, B23Q 1/01, B23Q 3/157

(54) **WERKZEUGMASCHINE UND VERFAHREN ZUM BETREIBEN DER WERKZEUGMASCHINE**
MACHINE TOOL AND METHOD FOR OPERATING SAME
MACHINE-OUTIL ET PROCÉDÉ DE FONCTIONNEMENT DE LA MACHINE-OUTIL

(30) Priorität: 24.07.2020 EP 20187633
(43) Veröffentlichungstag der Anmeldung: 26.01.2022
(60) Teilanmeldung: 23174098.6
(73) Patentinhaber: Fill Gesellschaft m.b.H., 4942 Gurten (AT)
(72) Erfinder: GADRINGER, Markus, 4942 Gurten (AT); DALLINGER, Friedrich, 4942 Gurten (AT)
(74) Vertreter: Burger, Hannes

(56) Entgegenhaltungen:
- EP-A1- 1 122 027
- EP-A1- 1 695 791
- EP-A2- 1 402 991
- DE-A1-102016 015 806
- DE-T2- 69 907 283
- DE-U1- 29 907 963
- JP-A- H02 279 249
- JP-A- S62 218 007
- JP-A- S62 218 008
- JP-U- S63 110 336
- US-B1- 6 203 478

## Beschreibung

Die Erfindung betrifft eine Werkzeugmaschine, sowie ein Verfahren zum Betreiben der Werkzeugmaschine und eine Bearbeitungsanlage umfassend zumindest zwei Werkzeugmaschinen.

Aus der WO 2005/025801 A1 und der WO 00/37213 A2 sind sogenannte Doppelspindelmaschinen bekannt. Bei derartigen Doppelspindelmaschinen können zwei Werkstücke gleichzeitig mittels jeweils eines in die Werkzeugspindeln eingesetzten Werkzeuges bearbeitet werden. Beide Werkzeugspindeln und damit auch beide Werkzeuge werden synchron in den drei Achsen des Koordinatensystems verfahren, so dass an den beiden Werkstücken identische Bearbeitungsvorgänge ablaufen.

Die aus der WO 2005/025801 A1 und der WO 00/37213 A2 bekannten Doppelspindelmaschinen weisen den Nachteil auf, dass aufgrund deren Aufbau die maximale Länge des Werkstückes, welches bearbeitet werden kann, begrenzt ist.

Aus der US 6 203 478 B1 ist eine Werkzeugmaschine bekannt. Die Werkzeugmaschine umfasst ein Maschinengestell, eine erste Arbeitsspindel, welche um eine erste Spindelachse drehbar gelagert ist, eine zweite Arbeitsspindel, welche um eine zweite Spindelachse drehbar gelagert ist und eine Werkstückspannvorrichtung, welche zum Aufnehmen zumindest eines ersten Werkstückes und eines zweiten Werkstückes ausgebildet ist. Die erste Arbeitsspindel und die zweite Arbeitsspindel sind vertikal übereinander angeordnet.

Ein als D12a im Erteilungsverfahren geführtes Bild zeigt die Werkzeugmaschine "Xflex Twin"der Firma Etxetar, so wie sie auf der Webseite etxetar.com spätestens am 01-06-2020 zu sehen war.

Ein als D12b im Erteilungsverfahren geführtes Bild zeigt ein erstes Paar an übereinander angeordneten Arbeitsspindeln und ein zweites Paar an übereinander angeordneten Arbeitsspindeln. Ein als D12c im Erteilungsverfahren geführtes Bild zeigt übereinander angeordnete Arbeitsspindeln. Ein als D12d im Erteilungsverfahren geführtes Bild zeigt zwei nebeneinander angeordnete Arbeitsspindeln.

Aufgabe der vorliegenden Erfindung war es, die Nachteile des Standes der Technik zu überwinden und eine verbesserte Werkzeugmaschine, sowie ein verbessertes Verfahren zum Betreiben der Werkzeugmaschine, sowie eine verbesserte Bearbeitungsanlage zur Verfügung zu stellen.

Diese Aufgabe wird durch eine Vorrichtung und ein Verfahren gemäß den Ansprüchen gelöst.

Gemäß der Erfindung ist vorgesehen, dass die Werkstückspannvorrichtung zumindest einen ersten rückwärtigen Werkstücktisch und einen zweiten rückwärtigen Werkstücktisch umfasst, wobei der erste rückwärtige Werkstücktisch um eine erste rückwärtige Schwenkachse, welche parallel zu einer horizontalen X-Achse ausgerichtet ist, schwenkbar gelagert ist und der zweite rückwärtige Werkstücktisch um eine zweite rückwärtige Schwenkachse , welche parallel zur X-Achse ausgerichtet ist, schwenkbar gelagert ist und dass der erste Werkstücktisch und der zweite Werkstücktisch an einer ersten Seite einer Schwenkbrücke, welche um eine parallel zur X-Achse ausgerichtete Schwenkbrückenachse schwenkbar gelagert ist, angeordnet sind und dass der erste rückwärtige Werkstücktisch und der zweite rückwärtige Werkstücktisch an einer zweiten Seite der Schwenkbrücke angeordnet sind, wobei je nach Schwenkstellung der Schwenkbrücke

die erste Arbeitsspindel dem ersten Werkstücktisch zugeordnet ist und die zweite Arbeitsspindel dem zweiten Werkstücktisch zugeordnet ist oder
die erste Arbeitsspindel dem ersten rückwärtigen Werkstücktisch zugeordnet ist und die zweite Arbeitsspindel dem zweiten rückwärtigen Werkstücktisch zugeordnet ist. Dies bringt den Vorteil mit sich, dass am ersten Werkstücktisch bzw. am zweiten Werkstücktisch gespannte Werkstücke bearbeitet werden können, währenddessen am ersten rückwertigen Werkstücktisch bzw. am zweiten rückwärtigen Werkstücktisch die bereits bearbeiteten Werkstücke entnommen werden und neue Werkstückrohlinge eingesetzt werden. Somit kann die Effizienz der Werkzeugmaschine weiter erhöht werden. Eine derartige Ausgestaltung der Werkstückspannvorrichtung in Verbindung mit den vertikal übereinander angeordneten ersten Arbeitsspindel und zweiten Arbeitsspindel bringt überraschende Vorteile in der Zugänglichkeit und somit in der Austauschbarkeit der bereits bearbeiteten Werkstücke mit sich.

Insbesondere kann vorgesehen sein, dass zum Wechseln der Werkstücke die Schwenkbrücke in einer derartigen Schwenkstellung positioniert wird, dass der erste Werkstücktisch und der zweite Werkstücktisch in einem horizontalen Abstand nebeneinander angeordnet sind. Dies bringt den Vorteil mit sich, dass die Werkstücke einfach gewechselt werden können. Insbesondere können hierbei Hebezeuge, wie etwa Ketten oder sonstige Zugmittel zum Wechseln der Werkstücke verwendet werden, welche ausschließlich Zugkräfte aufnehmen können. Außerdem sind durch diese Maßnahme die Werkstücktische für eine Werkstückwechselvorrichtung zugänglich, welche überkopf angeordnet ist. Dies kann beispielsweise eine schienengeführte Werkstückwechselvorrichtung sein.

Ferner kann es zweckmäßig sein, wenn die Schwenkbrückenachse zentral zwischen der ersten Schwenkachse, der zweiten Schwenkachse, der ersten rückwärtigen Schwenkachse und der zweiten rückwärtigen Schwenkachse angeordnet ist. Dies bringt den Vorteil mit sich, dass der erste Werkstücktisch und der erste rückwärtige Werkstücktisch bzw. der zweite Werkstücktisch und der zweite rückwärtige Werkstücktisch, wenn sie in den Bearbeitungsraum der Werkzeugmaschine eingeschwenkt sind, die gleiche Position einnehmen und somit die Bearbeitung der Werkstücke ohne einer etwaig notwendigen Kompensation der Lage der Arbeitsspindeln bzw. der Schwenkbrücke durchgeführt werden kann.

Darüber hinaus kann vorgesehen sein, dass zwischen der ersten Seite der Schwenkbrücke und der zweiten Seite der Schwenkbrücke eine Trennwand ausgebildet ist, wobei im Bearbeitungszustand der Werkzeugmaschine durch die Trennwand ein Arbeitsraum der Werkzeugmaschine von einem Außenbereich der Werkzeugmaschine abgetrennt ist. Dies bringt den Vorteil mit sich, dass durch die Trennwand der Arbeitsraum der Werkzeugmaschine abgeschlossen werden kann, sodass die Maschinensicherheit der Werkzeugmaschine erhöht werden kann. Darüber hinaus kann durch diese Maßnahme die Schallemission der Werkzeugmaschine verringert werden.

Ein Bearbeitungswerkzeug im Sinne dieses Dokumentes kann beispielsweise ein spanabhebendes Bearbeitungswerkzeug sein. Ein Bearbeitungswerkzeug im Sinne dieses Dokumentes kann beispielsweise auch ein Reibrührschweißwerkzeug sein. Im Weitesten Sinne kann als Bearbeitungswerkzeug auch ein in der Arbeitsspindel aufgenommenes Messmittel oder Prüfmittel gesehen werden.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines ersten Beispiels einer Werkzeugmaschine;
- Fig. 2: eine Seitenansicht eines weiteren Beispiels einer Werkzeugmaschine mit drei Arbeitsspindeln;
- Fig. 3: eine perspektivische Ansicht der erfindungsgemäßen Werkzeugmaschine;
- Fig. 4: eine perspektivische Ansicht eines weiteren Beispiels einer Werkzeugmaschine mit einem Kettenumlaufmagazin;
- Fig. 5: eine schematische Darstellung eines Beispiels einer Bearbeitungsanlage mit zwei nebeneinander angeordneten Werkzeugmaschinen;
- Fig. 6: eine stark vereinfachte Darstellung eines weiteren Beispiels einer Werkzeugmaschine mit drei übereinander angeordneten Werkstücktischen;

- Fig. 7: eine stark vereinfachte Darstellung eines weiteren Beispiels einer Werkzeugmaschine mit drei übereinander angeordneten Werkstücktischen und zwei nebeneinander angeordneten Reihen von Arbeitsspindeln;
- Fig. 8: eine stark vereinfachte Darstellung eines weiteren Beispiels einer Werkzeugmaschine mit drei übereinander angeordneten Werkstücktischen und weiteren daneben angeordneten Werkstücktischen und zwei nebeneinander angeordneten Reihen von Arbeitsspindeln, welche jeweils einem Werkstücktisch zugeordnet sind,
- Fig. 9: eine stark vereinfachte Darstellung eines weiteren Ausführungsbeispiels der erfindungsgemäßenWerkzeugmaschine mit drei an einer Schwenktrommel übereinander angeordneten Werkstücktischen;
- Fig. 10: eine stark vereinfachte Darstellung eines weiteren Ausführungsbeispiels der erfindungsgemäßenWerkzeugmaschine mit drei an einer Schwenktrommel übereinander angeordneten Werkstücktischen und zwei nebeneinander angeordneten Reihen von Arbeitsspindeln;
- Fig. 11: eine schematische Seitenansicht eines weiteren Beispiels einer Werkzeugmaschine mit vier übereinander angeordneten Werkstücktischen und zwei übereinander angeordneten Arbeitsspindeln;
- Fig. 12: eine schematische Seitenansicht eines weiteren Beispiels einer Werkzeugmaschine mit zwei übereinander angeordneten Werkstücktischen und jeweils zwei an einem Werkstücktisch angeordneten Werkstücken;
- Fig. 13: eine schematische Seitenansicht eines weiteren Beispiels einer Werkzeugmaschine mit zwei übereinander angeordneten Werkstücktischen und jeweils einem am Werkstücktisch angeordneten Rundtisch zur Aufnahme von jeweils zwei Werkstücken,
- Fig. 14: eine stark vereinfachte Darstellung eines weiteren Beispiels einer Werkzeugmaschine mit drei übereinander angeordneten Werkstücktischen, wobei die einzelnen Werkstücktische versetzt zueinander angeordnet sind;
- Fig. 15: eine stark vereinfachte Darstellung eines weiteren Ausführungsbeispiels der Werkzeugmaschine mit drei übereinander angeordneten Werkstücktischen, wobei die einzelnen Werkstücktische in Richtung der Z-Achse verschiebbar sind.

Einführend sei festgehalten, dass in den unterschiedlich beschriebenen Beispielen bzw. Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

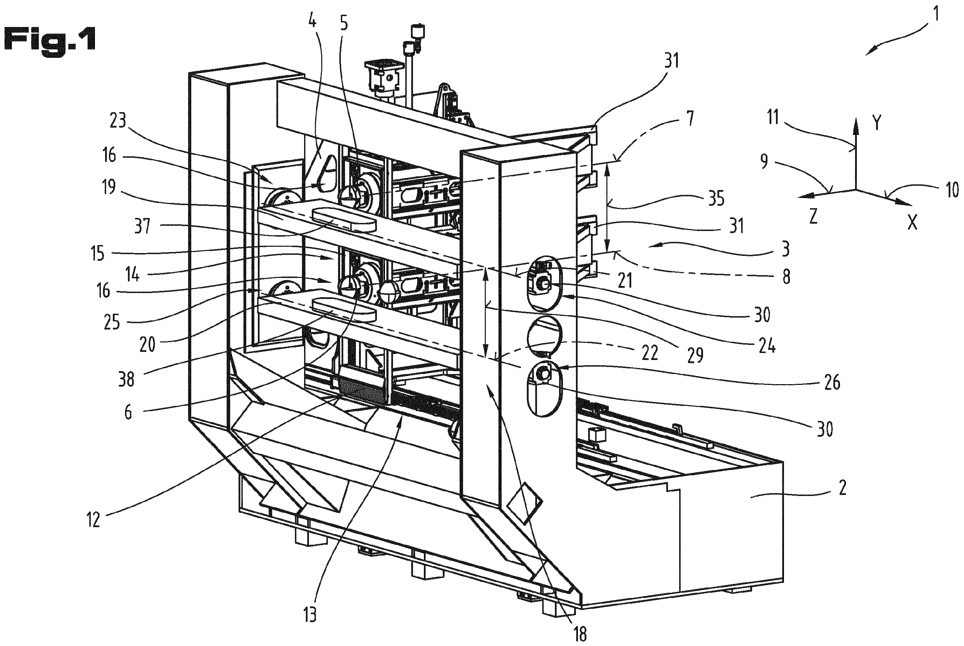

Fig. 1 zeigt eine schematische Darstellung einer Werkzeugmaschine 1 zur spanabhebenden Bearbeitung von Werkstücken 32, 33. Die Werkzeugmaschine 1 weist ein Maschinengestell 2 auf, welches als Basis für die daran angebauten Bauteile dient.

Das Maschinengestell 2 ist in Fig. 1 der Übersichtlichkeit halber nur schematisch dargestellt. Es sei jedoch festgehalten, dass das Maschinengestell 2 am Aufstellungsort verankert sein kann. Darüber hinaus dient das Maschinengestell 2 natürlich zur Aufnahme sämtlicher Bauteile der Werkzeugmaschine 1.

Weiters ist eine Spindelverstellvorrichtung 3 ausgebildet, welche am Maschinengestell 2 angeordnet ist bzw. mit diesem gekoppelt ist. Die Spindelverstellvorrichtung 3 weist einen Arbeitskopf 4 auf, an welchem eine erste Arbeitsspindel 5 und eine zweite Arbeitsspindel 6 gelagert sind. Die erste Arbeitsspindel 5 ist um eine erste Spindelachse 7 drehbar am Arbeitskopf 4 gelagert und die zweite Arbeitsspindel 6 ist um eine zweite Spindelachse 8 drehbar am Arbeitskopf 4 gelagert. Die beiden Arbeitsspindeln 5, 6 dienen jeweils zur Aufnahme eines Bearbeitungswerkzeugs und weisen hierzu eine Spannvorrichtung zur Aufnahme des Bearbeitungswerkzeuges auf.

Die Arbeitsspindeln 5, 6 sind mittels der Spindelverstellvorrichtung 3 in einer Z-Achse 9, in einer X-Achse 10 und in einer im rechten Winkel zur Z-Achse 9 und X-Achse 10 angeordneten Y-Achse 11 relativ zum Maschinengestell 2 verstellbar. Insbesondere kann vorgesehen sein, dass die Z-Achse 9 horizontal angeordnet ist. Die Z-Achse 9 ist parallel zur ersten Spindelachse 7 und zur zweiten Spindelachse 8 angeordnet. Weiters kann vorgesehen sein, dass die X-Achse 10 ebenfalls horizontal angeordnet ist. Die X-Achse 10 ist im rechten Winkel zur Z-Achse 9 angeordnet.

Die Spindelverstellvorrichtung 3 weist eine Hauptverstelleinheit 12 auf, welche mittels einer X-Achsen-Linearführung 13 mit dem Maschinengestell 2 gekoppelt ist. Zur vereinfachten Veranschaulichung ist die X-Achsen-Linearführung 13 nur rudimentär dargestellt. Insbesondere kann vorgesehen sein, dass die X-Achsen-Linearführung 13 vier oder auch mehr Führungsschlitten aufweist, welche mit der Hauptverstelleinheit 12 gekoppelt sind und welche mit zwei Führungsschienen zusammenwirken, die mit dem Maschinengestell 2 gekoppelt sind.

Durch die X-Achsen-Linearführung 13 ist die Hauptverstelleinheit 12 in Richtung der X-Achse 10 relativ bezüglich des Maschinengestells 2 verschiebbar.

Weiters kann vorgesehen sein, dass eine Höhenverstelleinheit 14 ausgebildet ist, welche mittels einer Y-Achsen-Linearführung 15 mit der Hauptverstelleinheit 12 gekoppelt ist. Durch die Y-Achsen-Linearführung 15 ist die Höhenverstelleinheit 14 entlang der Y-Achse 11 relativ zur Hauptverstelleinheit 12 bzw. relativ zum Maschinengestell 2 verschiebbar.

In einer ersten, in Fig. 1 dargestellten Ausführungsvariante, kann vorgesehen sein, dass die erste Arbeitsspindel 5 und die zweite Arbeitsspindel 6 jeweils an einer eigenen Höhenverstelleinheit 14 angeordnet sind und somit unabhängig voneinander entlang einer Y-Achse 11 verschiebbar sind. Bei dieser Ausführungsvariante wird für jede der Höhenverstelleinheiten 14 ein eigener Antrieb benötigt.

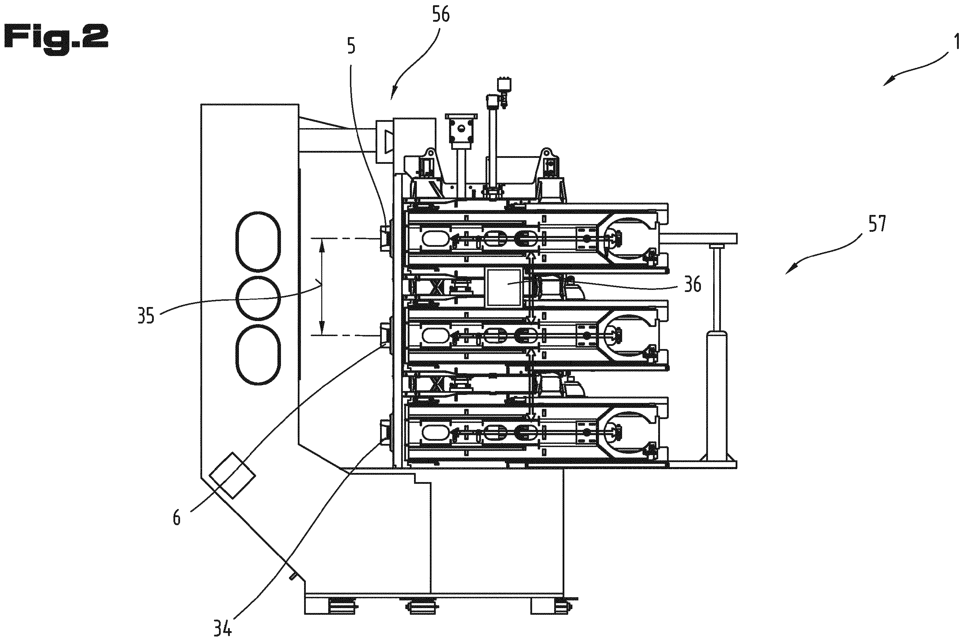

In einer weiteren, in Fig. 2 dargestellten Ausführungsvariante kann vorgesehen sein, dass die erste Arbeitsspindel 5 und die zweite Arbeitsspindel 6 an einer gemeinsamen Höhenverstelleinheit 14 angeordnet sind und somit gemeinsam entlang einer Y-Achse 11 verschiebbar sind. Bei dieser Ausführungsvariante wird für die gemeinsame Höhenverstelleinheiten 14 nur ein einzelner Antrieb benötigt.

Die Y-Achsen-Linearführung 15 kann ebenfalls eine Führungsschiene aufweisen, welche an der Hauptverstelleinheit 12 angeordnet ist und welche mit einem oder mehreren Führungsschlitten gekoppelt ist, die an der ersten Arbeitsspindel 5 bzw. der zweiten Arbeitsspindel 6 angeordnet sind.

Weiters kann, wie aus der Darstellung nach Fig. 1 ersichtlich, vorgesehen sein, dass die erste Arbeitsspindel 5 mittels einer ersten Z-Achsen-Linearführung 16 in der Z-Achse 9 verschiebbar ist und dass die zweite Arbeitsspindel 6 mittels einer zweiten Z-Achsen-Linearführung 16 in der Z-Achse 9 verschiebbar ist, wobei die erste Arbeitsspindel 5 und die zweite Arbeitsspindel 6 unabhängig voneinander verschiebbar sind.

Außerdem umfasst die Werkzeugmaschine 1 eine Werkstückspannvorrichtung 18, welche zur Aufnahme der zu bearbeitenden Werkstücke 32, 33 dient.

Die Werkstückspannvorrichtung 18 weist einen ersten Werkstücktisch 19 und einen zweiten Werkstücktisch 20 auf. Der erste Werkstücktisch 19 ist bezüglich einer ersten Schwenkachse 21 relativ zum Maschinengestell 2 verschwenkbar. Der zweite Werkstücktisch 20 ist bezüglich einer zweiten Schwenkachse 22 relativ zum Maschinengestell 2 verschwenkbar.

Die beiden Schwenkachsen 21, 22 der beiden Werkstücktische 19, 20 sind parallel zur X-Achse 10 angeordnet. Insbesondere ist vorgesehen, dass der erste Werkstücktisch 19 zur Aufnahme des ersten Werkstückes 32 dient und der zweite Werkstücktisch 20 zur Aufnahme des zweiten Werkstückes 33 dient.

Insbesondere kann vorgesehen sein, dass das erste Werkstück 32 und das zweite Werkstück 33 in deren Außenkontur gleich zueinander ausgebildet sind und an den beiden Werkstücken 32, 33 die gleichen Bearbeitungsschritte durchgeführt werden. Die beiden Werkstücktische 19, 20 sind der Übersichtlichkeit halber in Fig. 1 ebenfalls nur rudimentär dargestellt. Natürlich können verschiedenste Befestigungsmöglichkeiten zur Befestigung der Werkstücke 32, 33 an den Werkstücktischen 19, 20 vorgesehen sein. Insbesondere kann vorgesehen sein, dass an den beiden Werkstücktischen 19, 20 jeweils Rundtische ausgebildet sind, welche zur Befestigung der Werkstücke 32, 33 und gleichzeitig zum Verdrehen der der Werkstücke 32, 33 relativ zu den Werkstücktischen 19, 20 dienen.

Der erste Werkstücktisch 19 ist mittels einer ersten Schwenklagerung 23 und einer zweiten Schwenklagerung 24 drehbar am Maschinengestell 2 gelagert. Analog dazu ist der zweite Werkstücktisch 20 mittels einer ersten Schwenklagerung 25 und einer zweiten Schwenklagerung 26 drehbar am Maschinengestell 2 gelagert. Die Schwenklagerungen 23, 24, 25, 26 können beispielsweise in Form von Lagerböcken ausgebildet sein, welche entsprechenden Aufnahmen am Werkstücktisch 19 befestigt sind.

Wie aus Fig. 1 ersichtlich, kann vorgesehen sein, dass der erste Werkstücktisch 19 einen Werkstückspannbereich aufweist, welcher sich zwischen der ersten Schwenklagerung 23 und der zweiten Schwenklagerung 24 erstreckt. Analog dazu kann vorgesehen sein, dass der zweite Werkstücktisch 20 einen Werkstückspannbereich aufweist, welcher sich zwischen der ersten Schwenklagerung 25 und der zweiten Schwenklagerung 26 des zweiten Werkstücktisches 20 erstreckt.

Der Werkstückspannbereich des ersten Werkstücktisches 19 weist eine Werkstückspannlänge 27 auf. Der Werkstückspannbereich des zweiten Werkstücktisches 20 weist eine Werkstückspannlänge 28 auf. Vorzugsweise ist vorgesehen, dass der erste Werkstücktisch 19 und der zweite Werkstücktisch 20 gleich ausgebildet sind.

Die beiden Werkstücktische 19, 20 bzw. die beiden Schwenkachsen 21, 22 sind in einem Abstand 29 zueinander angeordnet. Der Abstand 29 erstreckt sich ebenfalls in Richtung der Y-Achse 11. Durch die beschriebene Ausprägung wird erreicht, dass die erste Arbeitsspindel 5 dem ersten Werkstücktisch 19 zugeordnet ist und dass die zweite Arbeitsspindel 6 dem zweiten Werkstücktisch 20 zugeordnet ist.

Insbesondere kann vorgesehen sein, dass in der Werkstückspannvorrichtung 18 eine Verstellvorrichtung angeordnet ist, mittels welcher der Abstand 29 der beiden Werkstücktische 19, 20 bzw. der beiden Schwenkachsen 21, 22 zueinander verstellt werden kann.

Mittels der Werkzeugmaschine 1 können zwei Werkstücke 32, 33, die baugleich ausgebildet sind, parallel zueinander bearbeitet werden. Hierbei wird das erste Werkstück 32 am ersten Werkstücktisch 19 und das zweite Werkstück 33 am zweiten Werkstücktisch 20 gespannt. Das Werkzeug der ersten Arbeitsspindel 5 bearbeitet das erste Werkstück 32 und das Werkzeug der zweiten Arbeitsspindel 6 bearbeitet das zweite Werkstück 33. Durch den Aufbau der Werkzeugmaschine 1 erfolgt die Bearbeitung des ersten Werkstückes 32 und des zweiten Werkstückes 33 synchron. Somit können mittels einer möglichst einfach aufgebauten Werkzeugmaschine 1 zwei Werkstücke 32, 33 gleichzeitig bearbeitet werden, wodurch die Auslastung der Werkzeugmaschine 1 bzw. deren Produktivität verbessert werden kann.

Darüber hinaus kann vorgesehen sein, dass der erste Werkstücktisch 19 eine Antriebseinheit zum verschwenken aufweist und der zweite Werkstücktisch 20 ebenfalls eine Antriebseinheit 30 zum Verschwenken aufweist. Bei einem derartigen Ausführungsbeispiel können der erste Werkstücktisch 19 und der zweite Werkstücktisch 20 unabhängig voneinander verschwenkt werden.

In einer Alternativvariante kann vorgesehen sein, dass die Werkstücktische 19, 20 mittels einer gemeinsamen Antriebseinheit 30 geschwenkt werden.

Die Antriebseinheit 30 kann beispielsweise in Form eines Torquemotors ausgebildet sein.

Der Torquemotor kann beispielsweise mittels eines Riementriebes mit den beiden Werkstücktischen 19, 20 gekoppelt sein. Alternativ dazu kann vorgesehen sein, dass der Torquemotor mittels eines Schneckengetriebes mit den beiden Werkstücktischen 19, 20 gekoppelt ist.

In wieder einer andern Alternativvariante kann vorgesehen sein, dass der Rotor des Torquemotors direkt in den Werkstücktischen 19, 20 integriert ist und somit je Werkstücktisch 19, 20 ein eigener Torquemotor ausgebildet ist.

Weiters kann vorgesehen sein, dass die beiden Arbeitsspindeln 5, 6 von einer gemeinsamen Antriebseinheit 31 angetrieben werden. Die Antriebseinheit 31 kann beispielsweise durch einen Drehstromasynchronmotor gebildet sein, welcher mit einem Frequenzumrichter angesteuert wird.

Weiters ist es auch denkbar, dass die Antriebseinheit 31 in Form eines Synchronmotors ausgebildet ist.

Natürlich kann auch vorgesehen sein, dass jede der Arbeitsspindeln 5, 6 von einer eigenen Antriebseinheit 31 angetrieben wird. Hierbei kann vorgesehen sein, dass die Arbeitsspindel 5, 6 gleichzeitig der Läufer der Antriebseinheit 31 ist.

Die Arbeitsspindeln 5, 6 der in Fig. 1 dargestellten Werkzeugmaschine 1 sind bezüglich der Z-Achse 9, der X-Achse 10 und der Y-Achse 11 verschiebbar und bezüglich einer Parallelen zur Y-Achse verschwenkbar. Die in den Werkstücktischen 19, 20 aufgenommenen Werkstücke 32, 33 sind bezüglich einer Parallelen zur X-Achse 10 verschwenkbar. Somit weisen die Arbeitsspindeln 5, 6 fünf Freiheitsgrade bezüglich der Verstellung relativ zum bearbeitenden Werkstück 32, 33 auf.

Weiters kann vorgesehen sein, dass zumindest eine der Arbeitsspindeln 5, 6 einzeln und unabhängig von der anderen Arbeitsspindel 5, 6 in einer Axialrichtung der Spindelachse 7, 8 der Arbeitsspindel 5, 6 relativ zum Arbeitskopf 4 verstellbar ausgebildet ist. In einer Weiterbildung kann vorgesehen sein, dass beide Arbeitsspindeln 5, 6 in einer Axialrichtung der Spindelachse 7, 8 der Arbeitsspindel 5, 6 relativ zum Arbeitskopf 4 verstellbar ausgebildet sind.

In der Fig. 2 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen. Insbesondere wird darauf hingewiesen, dass das Ausführungsbeispiel jener Werkzeugmaschine 1, welche in Fig. 2 dargestellt ist, die gleichen Merkmale oder zumindest teilweise die gleichen Merkmale wie jenes Ausführungsbeispiel der Werkzeugmaschine 1, welche in Fig. 1 dargestellt ist aufweisen kann.

Wie aus Fig. 2 ersichtlich, kann vorgesehen sein, dass zusätzlich zur ersten Arbeitsspindel 5 und zur zweiten Arbeitsspindel 6 eine dritte Arbeitsspindel 34 ausgebildet ist, wobei die erste Arbeitsspindel 5, die zweite Arbeitsspindel 6 und die dritte Arbeitsspindel 34 vertikal übereinander angeordnet sind.

Unabhängig von der Ausbildung einer dritten Arbeitsspindel 34 kann vorgesehen sein, dass ein Abstand 35 zwischen der ersten Arbeitsspindel 5 und der zweiten Arbeitsspindel 6 mittels einer Spindelabstandskompensationsvorrichtung 36 in der vertikalen Y-Achse 11 verstellbar ist.

Wie aus Fig. 2 weiters ersichtlich, kann vorgesehen sein, dass eine weitere X-Achsen-Linearführung 56 ausgebildet ist, welche von der X-Achsen-Linearführung 13 distanziert angeordnet ist. Insbesondere kann vorgesehen sein, dass die X-Achsen-Linearführung 13 an einem unteren Abschnitt der Höhenverstelleinheit 14 angeordnet ist und dass die weitere X-Achsen-Linearführung 56 an einem oberen Abschnitt der Höhenverstelleinheit 14 angeordnet ist. Wie aus Fig. 2 weiters ersichtlich, kann vorgesehen sein, dass die weitere X-Achsen-Linearführung 56 mit der Werkstückspannvorrichtung gekoppelt ist. Durch die in diesem Absatz beschriebenen Maßnahmen kann eine weitere Stabilisierung der Höhenverstelleinheit 14 und somit eine Verbesserung der Genauigkeit der Werkzeugmaschine 1 erreicht werden.

Wie in Fig. 2 schematisch angedeutet, kann vorgesehen sein, dass eine Hubunterstützung 57 ausgebildet ist, welche zwischen der Hauptverstelleinheit 12 und einer der Arbeitsspindeln 5, 6, 34 wirkt. Durch die Hubunterstützung 57 kann die Gewichtskraft der Arbeitsspindeln 5, 6, 34 zumindest teilweise ausgeglichen werden, wodurch die Energieeffizienz Werkzeugmaschine 1 verbessert werden kann. Die Hubunterstützung 57 kann beispielsweise in Form eines Pneumatikzylinders mit einem Druckspeicher ausgebildet sein. Weiters ist es natürlich auch denkbar, dass die Hubunterstützung 57 beispielsweise in Form eines Gegengewichtes ausgebildet ist, welches mittels eines Zugmittels über eine Umlenkung mit der Arbeitsspindel 5, 6, 34 gekoppelt ist. Insbesondere kann vorgesehen sein, dass für jede der Arbeitsspindeln 5, 6, 34 eine eigene Hubunterstützung 57 ausgebildet ist.

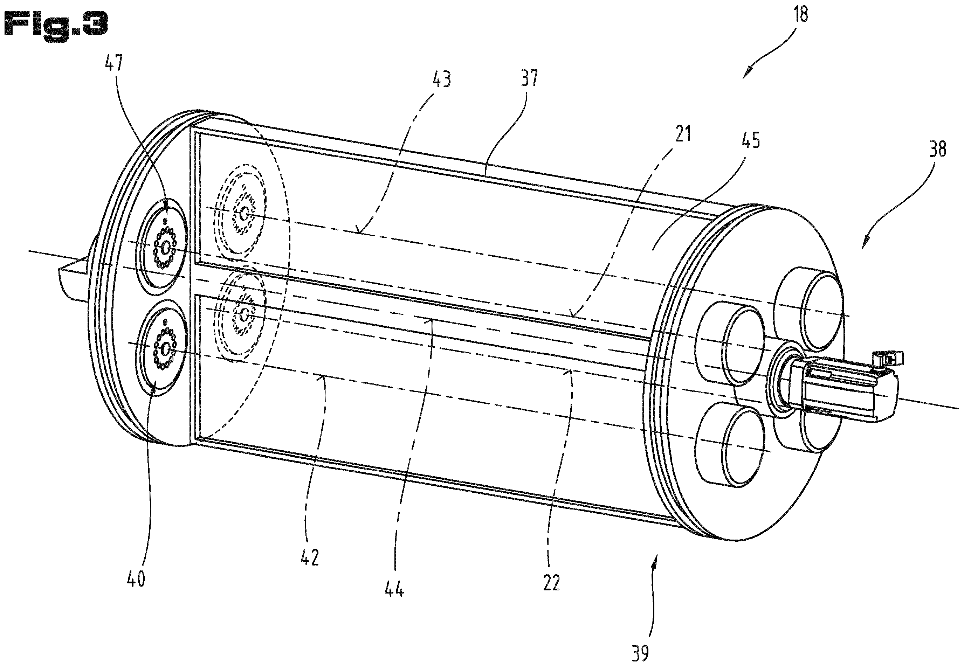

In der Fig. 3 ist in einer schematischen Darstellung der erfindungsgemäßen Werkzeugmaschine 1 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Wie aus Fig. 3 ersichtlich, ist vorgesehen, dass die Werkstückspannvorrichtung 18 eine Schwenkbrücke 37 aufweist, an welcher an einer ersten Seite 38 der erste Werkstücktisch 19 und der zweite Werkstücktisch 20 angeordnet sind. An einer zweiten Seite 39 der Schwenkbrücke 37 sind ein erster rückwärtiger Werkstücktisch 40 und einen zweiter rückwärtiger Werkstücktisch 41 ausgebildet.

Der erste rückwärtige Werkstücktisch 40 ist um eine erste rückwärtige Schwenkachse 42, welche parallel zu der horizontalen X-Achse 10 ausgerichtet ist, schwenkbar gelagert.

Der zweite rückwärtige Werkstücktisch 41 ist um eine zweite rückwärtige Schwenkachse 43, welche parallel zur X-Achse 10 ausgerichtet ist, schwenkbar gelagert.

Weiters ist vorgesehen, dass die Schwenkbrücke 37, um eine parallel zur X-Achse 10 ausgerichtete Schwenkbrückenachse 44 schwenkbar gelagert ist, sodass je nach Schwenkstellung der Schwenkbrücke 37 die erste Arbeitsspindel 5 dem ersten Werkstücktisch 19 zugeordnet ist und die zweite Arbeitsspindel 6 dem zweiten Werkstücktisch 20 zugeordnet ist oder die erste Arbeitsspindel 5 dem ersten rückwärtigen Werkstücktisch 40 zugeordnet ist und die zweite Arbeitsspindel 6 dem zweiten rückwärtigen Werkstücktisch 41 zugeordnet ist.

Mit anderen Worten ausgedrückt, kann entweder die erste Seite 38 der Schwenkbrücke 37 oder die zweite Seite 39 der Schwenkbrücke 37 in den Bearbeitungsraum der Werkzeugmaschine 1 eingeschwenkt sein.

Wie in Fig. 3 schematisch angedeutet, kann vorgesehen sein, dass zwischen der ersten Seite 38 der Schwenkbrücke 37 und der zweiten Seite 39 der Schwenkbrücke 37 eine Trennwand 45 ausgebildet ist. Die Trennwand 45 kann als Blechkonstruktion ausgebildet sein.

Insbesondere kann vorgesehen sein, dass die Schwenkbrücke 37 derart in der Werkzeugmaschine 1 aufgenommen ist, dass die Trennwand 45 zusammen mit einer Einhausung der Werkzeugmaschine 1 den Bearbeitungsraum der Werkzeugmaschine abschließt, sodass dieser von außen nicht zugänglich ist.

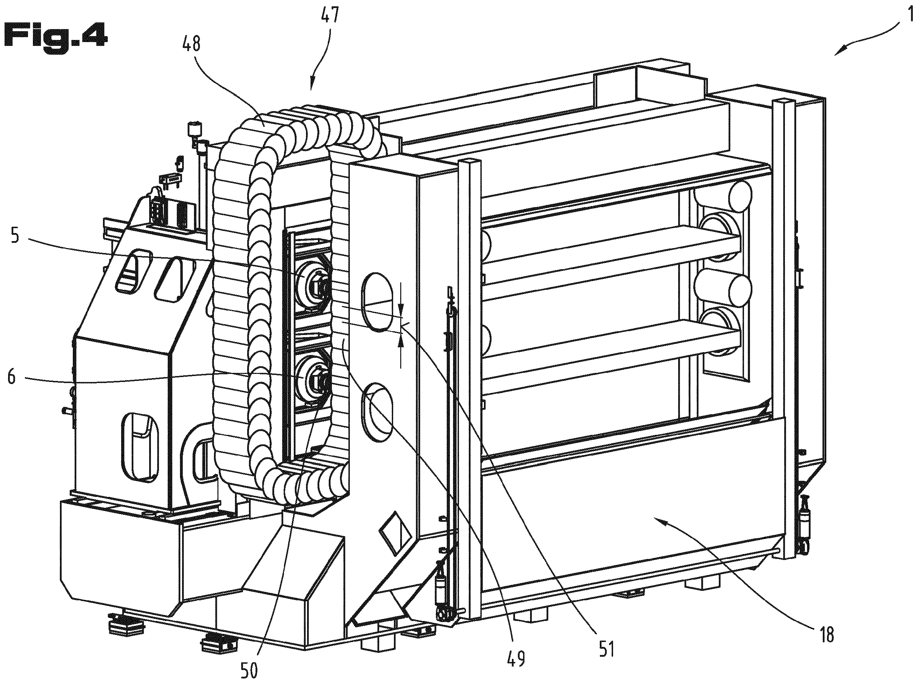

In der Fig. 4 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass an einem Längsende 46 der Werkstückspannvorrichtung 18 ein Werkzeugmagazin 47 angeordnet ist. Das Werkzeugmagazin 47 umfasst ein Kettenumlaufmagazin 48, wobei ein gerades Trum 49 des Kettenumlaufmagazines 48 vertikal ausgerichtet ist. Die erste Arbeitsspindel 5 und die zweite Arbeitsspindel 6 sind bis zum geraden Trum 49 des Kettenumlaufmagazines 48 verschiebbar. Die Bearbeitungswerkzeuge 50 können somit direkt mittels der ersten Arbeitsspindel 5 bzw. der zweiten Arbeitsspindel 6 aus dem Kettenumlaufmagazin 48 herausgenommen werden, bzw. in dieses abgelegt werden.

Insbesondere kann vorgesehen sein, dass der Abstand 35 zwischen der ersten Arbeitsspindel 5 und der zweiten Arbeitsspindel 6 einer Teilung 51 oder einem Vielfachen der Teilung 51 des Kettenumlaufmagazines 48 entspricht. Als Teilung 51 wird der Abstand der einzelnen Bearbeitungswerkzeugaufnahmen 52 des Kettenumlaufmagazines 48 bezeichnet.

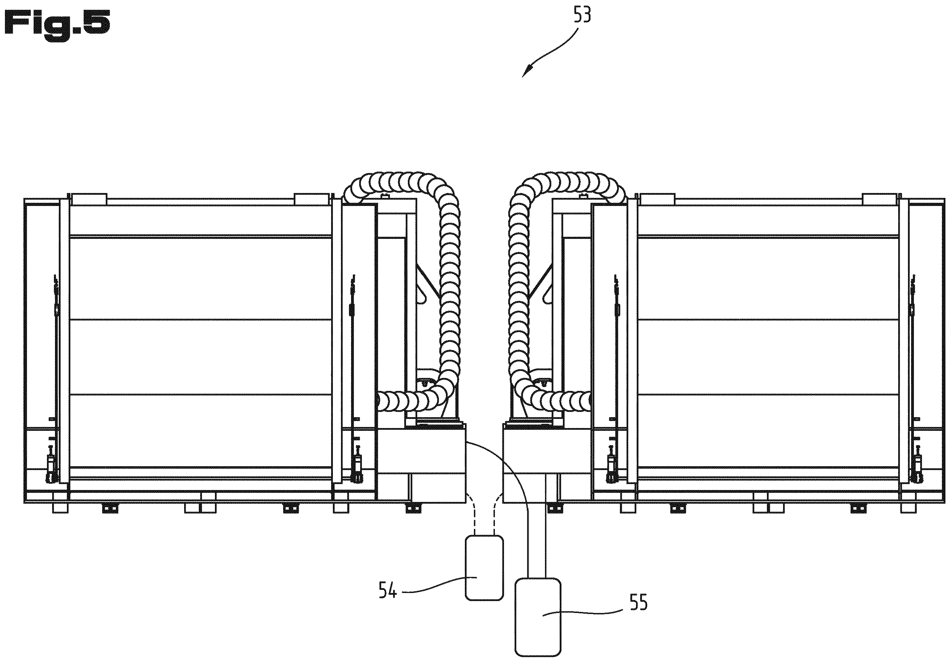

In der Fig. 5 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann vorgesehen sein, dass eine Bearbeitungsanlage 53 ausgebildet ist, in welcher zumindest zwei der Werkzeugmaschinen 1 nebeneinander aufgestellt sind. Insbesondere kann vorgesehen sein, dass für beide Werkzeugmaschinen 1 eine gemeinsame Steuerungstechnik 54 und/oder eine gemeinsame Medienversorgung 55 ausgebildet ist.

Im Ausführungsbeispiel nach Fig. 5 sind die beiden Werkzeugmaschinen 1 gespiegelt ausgebildet.

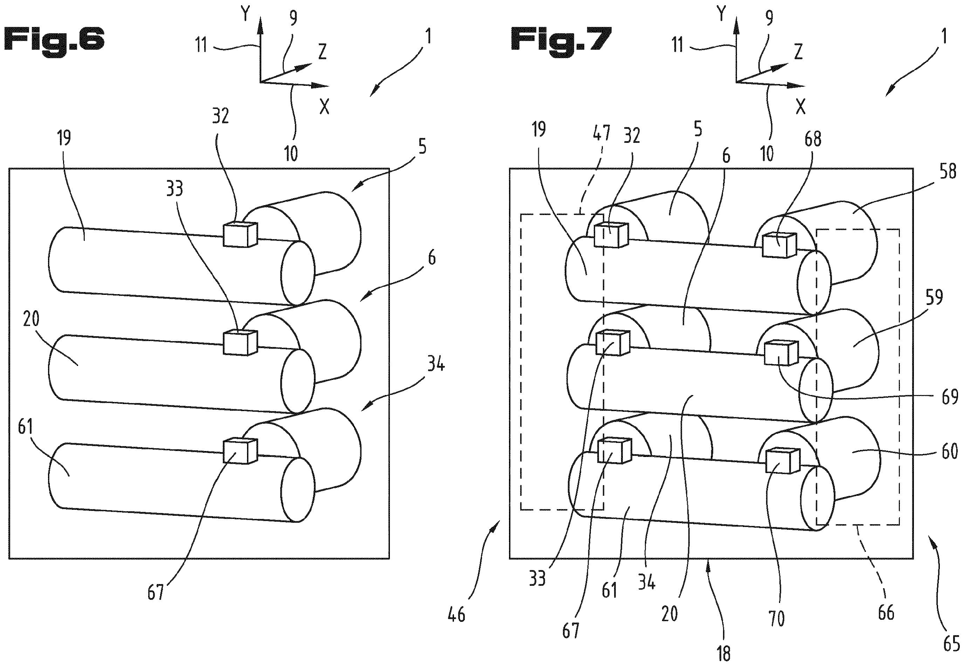

In der Fig. 6 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen. Die Werkzeugmaschine 1 ist in Fig. 6 der Übersichtlichkeit halber sehr vereinfacht dargestellt.

Wie aus Fig. 6 ersichtlich, kann vorgesehen sein, dass die Werkzeugmaschine 1 unterhalb der ersten Arbeitsspindel 5 und der zweiten Arbeitsspindel 6 die dritte Arbeitsspindel 34 aufweist. Die Arbeitsspindeln 5, 6, 34 können übereinander angeordnet sein. Wie aus Fig. 6 weiters ersichtlich, kann vorgesehen sein, dass die erste Arbeitsspindel 5 dem ersten Werkstücktisch 19 zugeordnet ist und zum Bearbeiten des darauf aufgenommenen ersten Werkstückes 32 dient. Die zweite Arbeitsspindel 6 kann dem zweiten Werkstücktisch 20 zugeordnet sein und zum Bearbeiten des darauf aufgenommenen zweiten Werkstückes 33 dienen. Die dritte Arbeitsspindel 34 kann einem dritten Werkstücktisch 61 zugeordnet sein und zum Bearbeiten des darauf aufgenommenen dritten Werkstückes 67 dienen.Die einzelnen Arbeitsspindeln 5, 6, 34 können einzeln und unabhängig voneinander verschiebbar sein. Alternativ dazu ist es auch denkbar, dass die einzelnen Arbeitsspindeln 5, 6, 34 an einem gemeinsamen Arbeitskopf 4 aufgenommen sind und zusammen verschiebbar sind.

In der Fig. 7 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Wie aus Fig. 7 ersichtlich, kann vorgesehen sein, dass neben der ersten Arbeitsspindel 5 eine vierte Arbeitsspindel 58 angeordnet ist, welche dem ersten Werkstücktisch 19 zugeordnet sein kann. Weiters kann neben der zweiten Arbeitsspindel 6 eine fünfte Arbeitsspindel 59 ausgebildet sein, welche dem zweiten Werkstücktisch 20 zugeordnet sein kann. Weiters kann neben der dritten Arbeitsspindel 34 eine sechste Arbeitsspindel 60 ausgebildet sein, welche dem dritten Werkstücktisch 61 zugeordnet sein kann. Die vierte Arbeitsspindel 58 kann zur Bearbeitung eines vierten Werkstückes 68 dienen. Die fünfte Arbeitsspindel 59 kann zur Bearbeitung eines fünften Werkstückes 69 dienen. Die sechste Arbeitsspindel 60 kann zur Bearbeitung eines sechsten Werkstückes 70 dienen.

Wie aus Fig. 7 weiters ersichtlich, kann vorgesehen sein, dass an einem der Längsenden 46 der Werkstückspannvorrichtung 18 das Werkmagazin 47 angeordnet ist. Am zweiten Längsende 65 der Werkstückspannvorrichtung 18 kann ein weiteres Werkzeugmagazin 66 angeordnet sein.

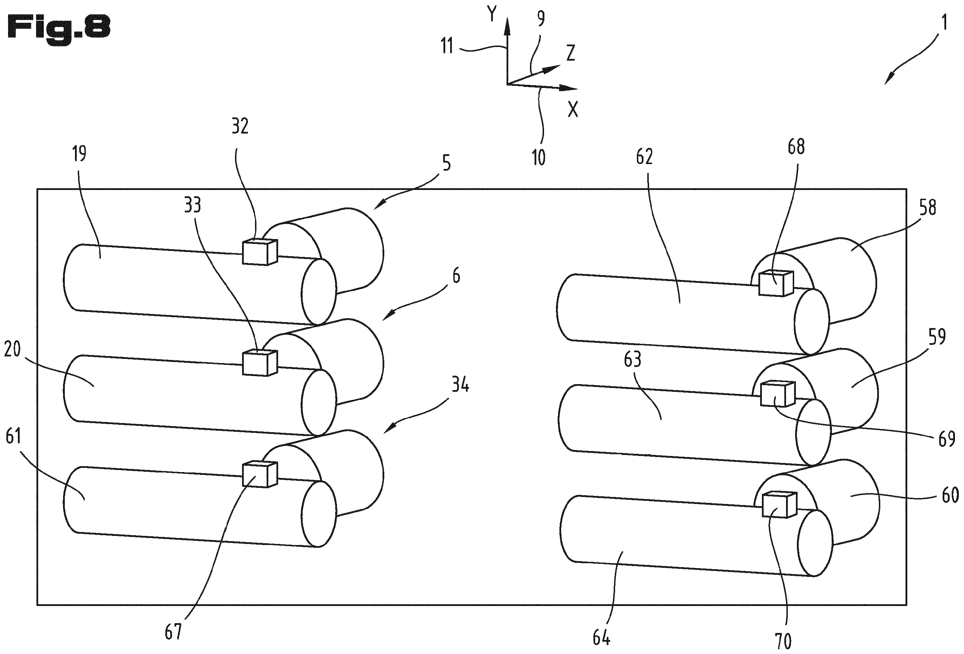

In der Fig. 8 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Wie aus Fig. 8 ersichtlich, kann vorgesehen sein, dass die erste Arbeitsspindel 5 dem ersten Werkstücktisch 19 zugeordnet ist und zum Bearbeiten des darauf aufgenommenen ersten Werkstückes 32 dient. Die zweite Arbeitsspindel 6 kann dem zweiten Werkstücktisch 20 zugeordnet sein und zum Bearbeiten des darauf aufgenommenen zweiten Werkstückes 33 dienen. Die dritte Arbeitsspindel 34 kann einem dritten Werkstücktisch 61 zugeordnet sein und zum Bearbeiten des darauf aufgenommenen dritten Werkstückes 67 dienen.

Wie aus Fig. 8 weiters ersichtlich, kann vorgesehen sein, dass neben dem ersten Werkstücktisch 19 ein vierter Werkstücktisch 62 ausgebildet ist. Weiters kann vorgesehen sein, dass neben dem zweiten Werkstücktisch 20 ein fünfter Werkstücktisch 63 angeordnet ist. Weiters kann vorgesehen sein, dass neben dem dritten Werkstücktisch 61 ein sechster Werkstücktisch 64 angeordnet ist. Die vierte Arbeitsspindel 58 kann dem vierten Werkstücktisch 62 zugeordnet sein, die fünfte Arbeitsspindel 59 kann dem fünften Werkstücktisch 63 zugeordnet sein, die sechste Arbeitsspindel 60 kann dem sechsten Werkstücktisch 64 zugeordnet sein.

Insbesondere kann vorgesehen sein, dass der erste Werkstücktisch 19, der zweite Werkstücktisch 20, der dritte Werkstücktisch 61, der vierte Werkstücktisch 62, der fünfte Werkstücktisch 63 und der sechste Werkstücktisch 64 an einem gemeinsamen Maschinengestell 2 aufgenommen sind.

Bei einer Ausführung der Werkzeugmaschine 1, wie sie in Fig. 8 dargestellt ist, kann vorgesehen sein, dass am ersten Werkstücktisch 19 ein erstes Längsende des ersten Werkstückes 32 aufgenommen ist und dass am vierten Werkstücktisch 62 ein zweites Längsende des ersten Werkstückes 32 aufgenommen ist. Dies bringt den Vorteil mit sich, dass durch diese Maßnahme längere Werkstücke an der Werkzeugmaschine 1 gespannt werden können. Hierbei wird das erste Längsende des ersten Werkstückes 32 mittels der ersten Arbeitsspindel 5 bearbeitet und das zweite Längsende des ersten Werkstückes 32 mittels der vierten Arbeitsspindel 58 bearbeitet. Bei einer derartigen Ausführung muss eine Drehbewegung des ersten Werkstücktisches 19 und eine Drehbewegung des vierten Werkstücktisch 62 synchronisiert sein.

Insbesondere ist es denkbar, dass sich ein möglicher Bearbeitungsbereich der ersten Arbeitsspindel 5 und ein möglicher Bearbeitungsbereich der vierten Arbeitsspindel 58 überlagern, sodass erreicht werden kann, dass das erste Werkstück 32 auf seiner vollen Länge bearbeitet werden kann.

Natürlich können analog dazu der zweite Werkstücktisch 20 und der fünfte Werkstücktisch 63 zur gemeinsamen Aufnahme des zweiten Werkstückes 33 dienen.

Weiters können analog dazu der dritte Werkstücktisch 61 und der sechste Werkstücktisch 64 zur gemeinsamen Aufnahme des dritten Werkstückes 67 dienen.

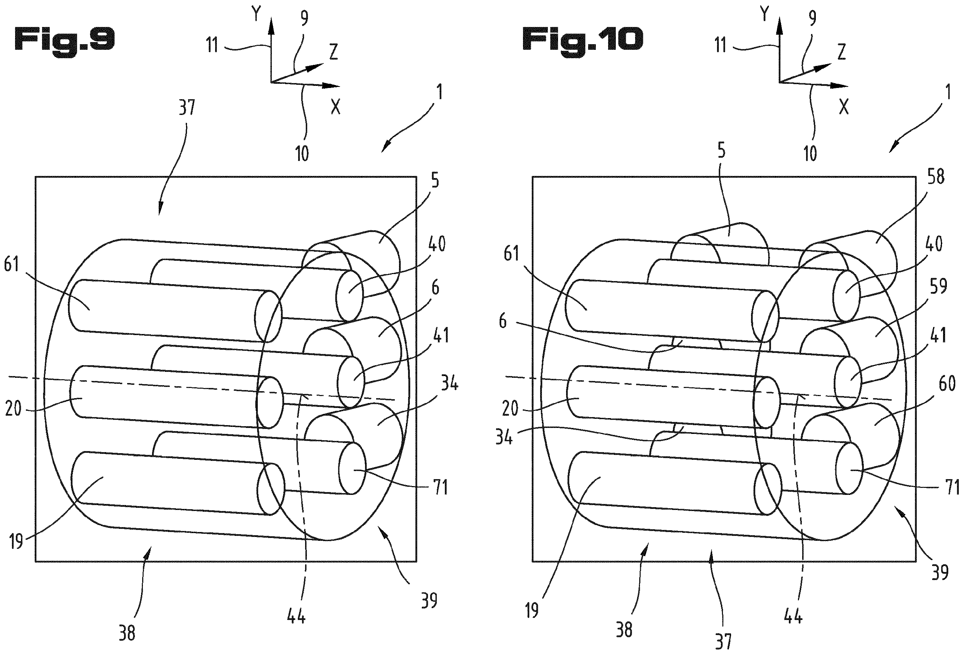

In der Fig. 9 ist in einer schematischen Darstellung eine weitere und gegebenenfalls für sich eigenständige Ausführungsform der erfindungsgemäßen Werkzeugmaschine 1 gezeigt, wobei wiederum für gleiche Teile gleiche Bezugszeichen bzw. Bauteilbezeichnungen wie in den vorangegangenen Figuren 1 bis 8 verwendet werden. Um unnötige Wiederholungen zu vermeiden, wird auf die detaillierte Beschreibung in den vorangegangenen Figuren 1 bis 8 hingewiesen bzw. Bezug genommen.

Wie aus Fig.9 ersichtlich, kann vorgesehen sein, dass an der ersten Seite 38 der Schwenkbrücke 37 der erste Werkstücktisch 19, der zweite Werkstücktisch 20 und der dritte Werkstücktisch 61 angeordnet sind. An der zweiten Seite 39 der Schwenkbrücke 37 können der erste rückwärtige Werkstücktisch 40, der zweite rückwärtige Werkstücktisch 41 und der dritte rückwärtige Werkstücktisch 71 angeordnet sein.

Wie aus Fig. 9 weiters ersichtlich, kann vorgesehen sein, dass die erste Arbeitsspindel 5 dem ersten Werkstücktisch 19 bzw. dem ersten rückwärtigen Werkstücktisch 40 zugeordnet ist. Weiters kann vorgesehen sein, dass die zweite Arbeitsspindel 6 dem zweiten Werkstücktisch 20 bzw. dem zweiten rückwärtigen Werkstücktisch 41 zugeordnet ist. Weiters kann vorgesehen sein, dass die dritte Arbeitsspindel 34 dem dritten Werkstücktisch 61 bzw. dem dritten rückwärtigen Werkstücktisch 71 zugeordnet ist.

In der Fig. 10 ist in einer schematischen Darstellung eine weitere und gegebenenfalls für sich eigenständige Ausführungsform der erfindungsgemäßen Werkzeugmaschine 1 gezeigt, wobei wiederum für gleiche Teile gleiche Bezugszeichen bzw. Bauteilbezeichnungen wie in den vorangegangenen Figuren 1 bis 9 verwendet werden. Um unnötige Wiederholungen zu vermeiden, wird auf die detaillierte Beschreibung in den vorangegangenen Figuren 1 bis 9 hingewiesen bzw. Bezug genommen.

Wie aus Fig. 10 ersichtlich, kann vorgesehen sein, dass an der ersten Seite 38 der Schwenkbrücke 37 der erste Werkstücktisch 19, der zweite Werkstücktisch 20 und der dritte Werkstücktisch 61 angeordnet sind. An der zweiten Seite 39 der Schwenkbrücke 37 können der erste rückwärtige Werkstücktisch 40, der zweite rückwärtige Werkstücktisch 41 und der dritte rückwärtige Werkstücktisch 71 angeordnet sein.

Wie aus Fig. 10 weiters ersichtlich, kann vorgesehen sein, dass die erste Arbeitsspindel 5 dem ersten Werkstücktisch 19 bzw. dem ersten rückwärtigen Werkstücktisch 40 zugeordnet ist. Weiters kann vorgesehen sein, dass die zweite Arbeitsspindel 6 dem zweiten Werkstücktisch 20 bzw. dem zweiten rückwärtigen Werkstücktisch 41 zugeordnet ist. Weiters kann vorgesehen sein, dass die dritte Arbeitsspindel 34 dem dritten Werkstücktisch 61 bzw. dem dritten rückwärtigen Werkstücktisch 71 zugeordnet ist.

Wie aus Fig. 10 weiters ersichtlich, kann vorgesehen sein, dass neben der ersten Arbeitsspindel 5 eine vierte Arbeitsspindel 58 angeordnet ist, welche dem ersten Werkstücktisch 19 bzw. dem ersten rückwärtigen Werkstücktisch 40 zugeordnet sein kann. Weiters kann neben der zweiten Arbeitsspindel 6 eine fünfte Arbeitsspindel 59 ausgebildet sein, welche dem zweiten Werkstücktisch 20 bzw. dem zweiten rückwärtigen Werkstücktisch 41 zugeordnet sein kann. Weiters kann neben der dritten Arbeitsspindel 34 eine sechste Arbeitsspindel 60 ausgebildet sein, welche dem dritten Werkstücktisch 61 bzw. dem dritten rückwärtigen Werkstücktisch 71 zugeordnet sein kann. Die vierte Arbeitsspindel 58 kann zur Bearbeitung eines vierten Werkstückes 68 dienen. Die fünfte Arbeitsspindel 59 kann zur Bearbeitung eines fünften Werkstückes 69 dienen. Die sechste Arbeitsspindel 60 kann zur Bearbeitung eines sechsten Werkstückes 70 dienen.

In den Ausführungsbeispielen nach den Figuren 6 bis 10 kann natürlich auch jeweils die dritte Arbeitsspindel 34, der dritte Werkstücktisch 61, die sechste Arbeitsspindel 60, der sechste Werkstücktisch 64 oder der dritte rückwärtige Werkstücktisch 71 weggelassen werden, sodass nur zwei Arbeitsspindeln bzw. Werkstücktische übereinander angeordnet sind.

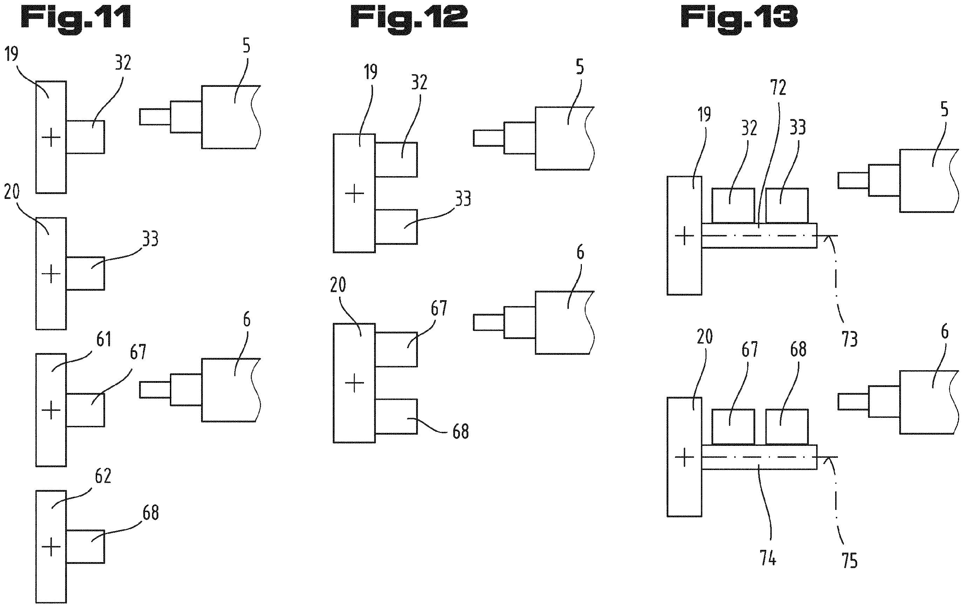

In der Fig. 11 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 10 verwendet werden. Um unnötige Wiederholungen zu vermeiden, wird auf die detaillierte Beschreibung in den vorangegangenen Figuren 1 bis 10 hingewiesen bzw. Bezug genommen.

In Fig. 11 ist die Werkzeugmaschine 1 in einer Seitenansicht dargestellt.

Wie aus Fig. 11 ersichtlich, kann vorgesehen sein, dass die erste Arbeitsspindel 5 zum Bearbeiten eines am ersten Werkstücktisch 19 gespannten Werkstückes und zeitlich versetzt zum Bearbeiten eines am zweiten Werkstücktisch 20 gespannten Werkstückes ausgebildet ist.

Die zweite Arbeitsspindel 6 kann zum Bearbeiten eines am dritten Werkstücktisch 61 gespannten Werkstückes und zeitlich versetzt zum Bearbeiten eines am vierten Werkstücktisch 62 gespanten Werkstückes ausgebildet sein. Auch bei dieser Ausführung kann vorgesehen sein, dass die einzelnen Werkstücktische übereinander angeordnet sind.

In der Fig. 12 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 11 verwendet werden. Um unnötige Wiederholungen zu vermeiden, wird auf die detaillierte Beschreibung in den vorangegangenen Figuren 1 bis 11 hingewiesen bzw. Bezug genommen.

In Fig. 12 ist die Werkzeugmaschine 1 in einer Seitenansicht dargestellt.

Wie aus Fig. 12 ersichtlich, kann vorgesehen sein, dass am ersten Werkstücktisch 19 ein erstes Werkstück 32 und ein zweites Werkstück 33 vertikal übereinanderliegend aufgenommen sind. Die erste Arbeitsspindel 5 kann zum zeitlich versetzten Bearbeiten des am ersten Werkstücktisch 19 aufgenommenen ersten Werkstückes 32 und des am ersten Werkstücktisch 19 aufgenommenen zweiten Werkstückes 33 dienen. Die zweite Arbeitsspindel 6 kann zum zeitlich versetzten Bearbeiten des am zweiten Werkstücktisch 20 aufgenommenen dritten Werkstückes 67 und des am zweiten Werkstücktisch 20 aufgenommenen vierten Werkstückes 68 dienen.

In der Fig. 13 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 12 verwendet werden. Um unnötige Wiederholungen zu vermeiden, wird auf die detaillierte Beschreibung in den vorangegangenen Figuren 1 bis 12 hingewiesen bzw. Bezug genommen.

In Fig. 13 ist die Werkzeugmaschine 1 in einer Seitenansicht dargestellt.

Wie aus Fig. 13 ersichtlich, kann vorgesehen sein, dass am ersten Werkstücktisch 19 ein erster Rundtisch 72 aufgenommen ist, welcher eine Schwenkachse 73 aufweist. Am ersten Rundtisch 72 können bezüglich der ersten Schwenkachse 73 in Axialrichtung versetzt das erste Werkstück 32 und das zweite Werkstück 33 aufgenommen sein.

Weiters kann vorgesehen sein, dass am zweiten Werkstücktisch 20 ein zweiter Rundtisch 74 aufgenommen ist, welcher eine zweite Schwenkachse 75 aufweist. Am zweiten Rundtisch 74 können bezüglich der zweiten Schwenkachse 75 in Axialrichtung versetzt das dritte Werkstück 67 und das vierte Werkstück 68 aufgenommen sein.

Natürlich ist es auch denkbar, dass mehrere Werkstücke an einem Rundtisch angeordnet sind. Weiters ist es auch denkbar, dass mehrere Rundtische übereinander angeordnet sind.

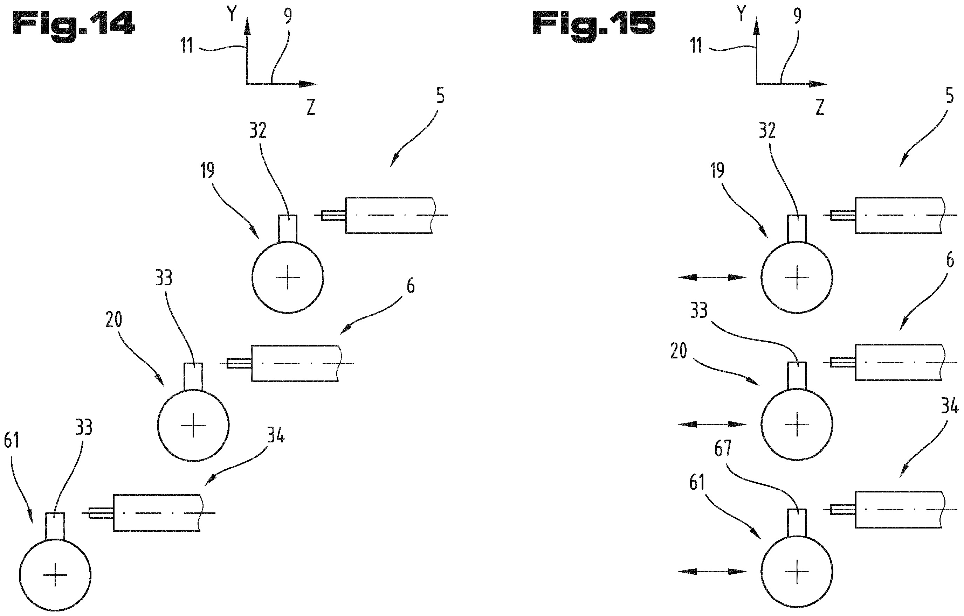

In der Fig. 14 ist in einer schematischen Darstellung eine weitere und gegebenenfalls für sich eigenständige Ausführungsform der Werkzeugmaschine 1 in einer Seitenansicht gezeigt, wobei wiederum für gleiche Teile gleiche Bezugszeichen bzw. Bauteilbezeichnungen wie in den vorangegangenen Figuren 1 bis 13 verwendet werden. Um unnötige Wiederholungen zu vermeiden, wird auf die detaillierte Beschreibung in den vorangegangenen Figuren 1 bis 13 hingewiesen bzw. Bezug genommen.

Wie aus Fig. 14 ersichtlich, kann vorgesehen sein, dass der erste Werkstücktisch 19, insbesondere der oberste Werkstücktisch 19, in Richtung der Z-Achse 9 am weitesten zum Arbeitskopf 4 hin versetzt angeordnet ist. Der zweite Werkstücktisch 20 kann in Richtung der Z-Achse 9 weiter vom Arbeitskopf beabstandet sein, als der erste Werkstücktisch 19. Der dritte Werkstücktisch 61 kann in Richtung der Z-Achse 9 weiter vom Arbeitskopf 4 beabstandet sein, als der zweite Werkstücktisch 20.

In der Fig. 15 ist in einer schematischen Darstellung eine weitere und gegebenenfalls für sich eigenständige Ausführungsform der Werkzeugmaschine 1 in einer Seitenansicht gezeigt, wobei wiederum für gleiche Teile gleiche Bezugszeichen bzw. Bauteilbezeichnungen wie in den vorangegangenen Figuren 1 bis 14 verwendet werden. Um unnötige Wiederholungen zu vermeiden, wird auf die detaillierte Beschreibung in den vorangegangenen Figuren 1 bis 14 hingewiesen bzw. Bezug genommen.

Wie aus Fig. 15 ersichtlich, kann vorgesehen sein, dass die einzelnen Werkstücktische 19, 20, 61 in Richtung der Z-Achse 9 verschiebbar sind.

Der Schutzbereich ist durch die Ansprüche bestimmt.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Werkzeugmaschine | 26 | zweite Schwenklagerung zweiter |
| 2 | Maschinengestell | | Werkstücktisch |
| 3 | gemeinsame Spindelverstellvorrichtung | 27 | Werkstückspannlänge Werkstückspannbereich erster Werkstücktisch |
| 4 | Arbeitskopf | | |
| 5 | erste Arbeitsspindel | 28 | Werkstückspannlänge Werk-stückspannbereich zweiter Werk-stücktisch |
| 6 | zweite Arbeitsspindel | | |
| 7 | erste Spindelachse | | |
| 8 | zweite Spindelachse | 29 | Abstand Werkstücktische |
| 9 | Z-Achse | 30 | Antriebseinheit Werkstücktische |
| 10 | X-Achse | 31 | Antriebseinheit Arbeitsspindeln |
| 11 | Y-Achse | 32 | erstes Werkstück |
| 12 | Hauptverstelleinheit | 33 | zweites Werkstück |
| 13 | X-Achsen-Linearführung | 34 | dritte Arbeitsspindel |
| 14 | Höhenverstelleinheit | 35 | Abstand erste Arbeitsspindel |
| 15 | Y-Achsen-Linearführung | | zweite Arbeitsspindel |
| 16 | Z-Achsen-Linearführung | 36 | Spindelabstandskompensations-vorrichtung |
| 17 | Schwenklagerung Arbeitskopf | | |
| 18 | Werkstückspannvorrichtung | 37 | Schwenkbrücke |
| 19 | erster Werkstücktisch | 38 | erste Seite der Schwenkbrücke |
| 20 | zweiter Werkstücktisch | 39 | zweite Seite der Schwenkbrücke |
| 21 | erste Schwenkachse | 40 | erster rückwärtiger Werkstücktisch |
| 22 | zweite Schwenkachse | 41 | zweiter rückwärtiger Werkstück-tisch |
| 23 | erste Schwenklagerung erster | | |
| | Werkstücktisch | 42 | erste rückwärtige Schwenkachse |
| 24 | zweite Schwenklagerung erster | 43 | zweite rückwärtige Schwenkachse |
| | Werkstücktisch | 44 | Schwenkbrückenachse |
| 25 | erste Schwenklagerung zweiter | 45 | Trennwand |
| | Werkstücktisch | 46 | Längsende |
| | | 47 | Werkzeugmagazin |
| | | 48 | Kettenumlaufmagazin |
| | | 49 | gerades Trum |
| | | 50 | Bearbeitungswerkzeug |
| | | 51 | Teilung |
| | | 52 | Bearbeitungswerkzeugaufnahme |
| | | 53 | Bearbeitungsanlage |
| | | 54 | Steuerungstechnik |
| | | 55 | Medienversorgung |
| | | 56 | weitere X-Achsen-Linearführung |
| | | 57 | Hubunterstützung |
| | | 58 | vierte Arbeitsspindel |
| | | 59 | fünfte Arbeitsspindel |
| | | 60 | sechste Arbeitsspindel |
| | | 61 | dritter Werkstücktisch |
| | | 62 | vierter Werkstücktisch |
| | | 63 | fünfter Werkstücktisch |
| | | 64 | sechster Werkstücktisch |
| | | 65 | zweites Längsende |
| | | 66 | weiteres Werkzeugmagazin |
| | | 67 | drittes Werkstück |
| | | 68 | viertes Werkstück |
| | | 69 | fünftes Werkstück |
| | | 70 | sechstes Werkstück |
| | | 71 | dritter rückwärtiger Werkstücktisch |
| | | 72 | erster Rundtisch |
| | | 73 | Schwenkachse erster Rundtisch |
| | | 74 | zweiter Rundtisch |
| | | 75 | Schwenkachse zweiter Rundtisch |

## Patentansprüche

1. Werkzeugmaschine (1) umfassend:
ein Maschinengestell (2);
zumindest eine erste Arbeitsspindel (5), welche um eine erste Spindelachse (7) drehbar gelagert ist;
zumindest eine zweite Arbeitsspindel (6), welche um eine zweite Spindelachse (8) drehbar gelagert ist;
eine Werkstückspannvorrichtung (18), welche zum Aufnehmen zumindest eines ersten Werkstückes (32) und eines zweiten Werkstückes (33) ausgebildet ist,
wobei die erste Arbeitsspindel (5) und die zweite Arbeitsspindel (6) vertikal übereinander angeordnet sind,
wobei die Werkstückspannvorrichtung (18) zumindest einen ersten Werkstücktisch (19) und einen zweiten Werkstücktisch (20) umfasst, wobei der erste Werkstücktisch (19) um eine erste Schwenkachse (21), welche parallel zu einer horizontalen X-Achse (10) ausgerichtet ist, schwenkbar gelagert ist und der zweite Werkstücktisch (20) um eine zweite Schwenkachse (22), welche parallel zur X-Achse (10) ausgerichtet ist, schwenkbar gelagert ist,
**dadurch gekennzeichnet, dass**
die Werkstückspannvorrichtung (18) zumindest einen ersten rückwärtigen Werkstücktisch (40) und einen zweiten rückwärtigen Werkstücktisch (41) umfasst, wobei der erste rückwärtige Werkstücktisch (40) um eine erste rückwärtige Schwenkachse (42), welche parallel zu einer horizontalen X-Achse (10) ausgerichtet ist, schwenkbar gelagert ist und der zweite rückwärtige Werkstücktisch (41) um eine zweite rückwärtige Schwenkachse (43), welche parallel zur X-Achse (10) ausgerichtet ist, schwenkbar gelagert ist und dass der erste Werkstücktisch (19) und der zweite Werkstücktisch (20) an einer ersten Seite (38) einer Schwenkbrücke (37), welche um eine parallel zur X-Achse (10) ausgerichtete Schwenkbrückenachse (44) schwenkbar gelagert ist, angeordnet sind und dass der erste rückwärtige Werkstücktisch (40) und der zweite rückwärtige Werkstücktisch (41) an einer zweiten Seite (39) der Schwenkbrücke (37) angeordnet sind, wobei je nach Schwenkstellung der Schwenkbrücke (37)
die erste Arbeitsspindel (5) dem ersten Werkstücktisch (19) zugeordnet ist und die zweite Arbeitsspindel (6) dem zweiten Werkstücktisch (20) zugeordnet ist oder
die erste Arbeitsspindel (5) dem ersten rückwärtigen Werkstücktisch (40) zugeordnet ist und die zweite Arbeitsspindel (6) dem zweiten rückwärtigen Werkstücktisch (41) zugeordnet ist.

2. Verfahren zum Betreiben einer Werkzeugmaschine (1) mit einem Maschinengestell (2), einer ersten Arbeitsspindel (5), welche um eine erste Spindelachse (7) drehbar gelagert ist, zumindest einer zweiten Arbeitsspindel (6), welche um eine zweite Spindelachse (8) drehbar gelagert ist und einer Werkstückspannvorrichtung (18), welche zum Aufnehmen zumindest eines ersten Werkstückes (32) und eines zweiten Werkstückes (33) ausgebildet ist, wobei die erste Arbeitsspindel (5) und die zweite Arbeitsspindel (6) vertikal übereinander angeordnet sind, wobei die Werkstückspannvorrichtung (18) zumindest einen ersten Werkstücktisch (19) und einen zweiten Werkstücktisch (20) umfasst, wobei der erste Werkstücktisch (19) um eine erste Schwenkachse (21), welche parallel zu einer horizontalen X-Achse (10) ausgerichtet ist, schwenkbar gelagert ist und der zweite Werkstücktisch (20) um eine zweite Schwenkachse (22), welche parallel zur X-Achse (10) ausgerichtet ist, schwenkbar gelagert ist,
wobei die Werkstückspannvorrichtung (18) zumindest einen ersten rückwärtigen Werkstücktisch (40) und einen zweiten rückwärtigen Werkstücktisch (41) umfasst, wobei der erste rückwärtige Werkstücktisch (40) um eine erste rückwärtige Schwenkachse (42), welche parallel zu einer horizontalen X-Achse (10) ausgerichtet ist, schwenkbar gelagert ist und der zweite rückwärtige Werkstücktisch (41) um eine zweite rückwärtige Schwenkachse (43), welche parallel zur X-Achse (10) ausgerichtet ist, schwenkbar gelagert ist und dass der erste Werkstücktisch (19) und der zweite Werkstücktisch (20) an einer ersten Seite (38) einer Schwenkbrücke (37), welche um eine parallel zur X-Achse (10) ausgerichtete Schwenkbrückenachse (44) schwenkbar gelagert ist, angeordnet sind und dass der erste rückwärtige Werkstücktisch (40) und der zweite rückwärtige Werkstücktisch (41) an einer zweiten Seite (39) der Schwenkbrücke (37) angeordnet sind, wobei je nach Schwenkstellung der Schwenkbrücke (37)
die erste Arbeitsspindel (5) dem ersten Werkstücktisch (19) zugeordnet ist und die zweite Arbeitsspindel (6) dem zweiten Werkstücktisch (20) zugeordnet ist oder
die erste Arbeitsspindel (5) dem ersten rückwärtigen Werkstücktisch (40) zugeordnet ist und die zweite Arbeitsspindel (6) dem zweiten rückwärtigen Werkstücktisch (41) zugeordnet ist, umfassend die Verfahrensschritte:
- Bearbeiten des ersten Werkstückes (32) mittels der ersten Arbeitsspindel (5);
- Bearbeiten des zweiten Werkstückes (33) mittels der zweiten Arbeitsspindel (6),
wobei das Bearbeiten des am ersten Werkstücktisch (19) aufgenommenen ersten Werkstückes (32) und das Bearbeiten des am zweiten Werkstücktisch (20) aufgenommenen zweiten Werkstückes (33) zeitgleich erfolgt.

## Claims

1. A machine tool (1) comprising:
a machine frame (2);
at least one first working spindle (5) which is mounted so as to be rotatable about a first spindle axis (7);
at least one second working spindle (6) which is mounted so as to be rotatable about a second spindle axis (8);
a workpiece clamping device (18) which is configured to receive at least a first workpiece (32) and a second workpiece (33),
wherein the first working spindle (5) and the second working spindle (6) are arranged vertically one above the other,
wherein the workpiece clamping device (18) comprises at least a first workpiece table (19) and a second workpiece table (20), wherein the first workpiece table (19) is mounted so as to be pivotable about a first pivot axis (21), which is aligned parallel to a horizontal X-axis (10), and the second workpiece table (20) is mounted so as to be pivotable about a second pivot axis (22), which is aligned parallel to the X-axis (10),
**characterized in that** the workpiece clamping device (18) comprises at least a first rear workpiece table (40) and a second rear workpiece table (41), wherein the first rear workpiece table (40) is mounted so as to be pivotable about a first rear pivot axis (42) which is aligned parallel to a horizontal X-axis (10), and the second rear workpiece table (41) is mounted so as to be pivotable about a second rear pivot axis (43) which is aligned parallel to the X-axis (10), and that the first workpiece table (19) and the second workpiece table (20) are arranged on a first side (38) of a swivel bridge (37), which is mounted such that it can be pivoted about a swivel bridge axis (44) aligned parallel to the X-axis (10), and that the first rear workpiece table (40) and the second rear workpiece table (41) are arranged on a second side (39) of the swivel bridge (37),
wherein, depending on the swivel position of the swivel bridge (37) the first working spindle (5) is assigned to the first workpiece table (19) and the second working spindle (6) is assigned to the second workpiece table (20) or
the first working spindle (5) is assigned to the first rear workpiece table (40) and the second working spindle (6) is assigned to the second rear workpiece table (41).

2. A method for operating a machine tool (1) having a machine frame (2), a first working spindle (5) which is mounted so as to be rotatable about a first spindle axis (7), at least one second working spindle (6) which is mounted so as to be rotatable about a second spindle axis (8), and a workpiece clamping device (18) which is configured to receive at least a first workpiece (32) and a second workpiece (33), wherein the first working spindle (5) and the second working spindle (6) are arranged vertically one above the other, wherein the workpiece clamping device (18) comprises at least a first workpiece table (19) and a second workpiece table (20), wherein the first workpiece table (19) is mounted so as to be pivotable about a first pivot axis (21), which is aligned parallel to a horizontal X-axis (10), and the second workpiece table (20) is mounted so as to be pivotable about a second pivot axis (22), which is aligned parallel to the X-axis (10), wherein the workpiece clamping device (18) comprises at least a first rear workpiece table (40) and a second rear workpiece table (41), wherein the first rear workpiece table (40) is mounted so as to be pivotable about a first rear pivot axis (42), which is aligned parallel to a horizontal X-axis (10), and the second rear workpiece table (41) is mounted so as to be pivotable about a second rear pivot axis (43), which is aligned parallel to the X-axis (10), and that the first workpiece table (19) and the second workpiece table (20) are arranged on a first side (38) of a swivel bridge (37), which is mounted so as to be pivotable about a swivel bridge axis (44), which is aligned parallel to the X-axis (10), and that the first rear workpiece table (40) and the second rear workpiece table (41) are arranged on a second side (39) of the swivel bridge (37), wherein, depending on the swivel position of the swivel bridge (37)
the first working spindle (5) is assigned to the first workpiece table (19) and the second working spindle (6) is assigned to the second workpiece table (20) or
the first working spindle (5) is assigned to the first rear workpiece table (40) and the second working spindle (6) is assigned to the second rear workpiece table (41), comprising the method steps:
- processing the first workpiece (32) by means of the first working spindle (5);
- processing the second workpiece (33) by means of the second working spindle (6),
wherein the processing of the first workpiece (32) received on the first workpiece table (19) and the processing of the second workpiece (33) received on the second workpiece table (20) are performed simultaneously.

## Revendications

1. Machine-outil (1) comprenant :
un bâti de machine (2) ;
au moins une première broche de travail (5) qui est logée de manière rotative autour d'un premier axe de broche (7) ;
au moins une deuxième broche de travail (6) qui est logée de manière rotative autour d'un deuxième axe de broche (8) ;
un dispositif de serrage de pièce (18) qui est conçu pour le logement d'au moins une première pièce (32) et d'une deuxième pièce (33) ;
dans laquelle la première broche de travail (5) et la deuxième broche de travail (6) sont disposées verticalement l'une au-dessus de l'autre,
dans laquelle le dispositif de serrage de pièce (18) comprend au moins une première table porte-pièce (19) et une deuxième table porte-pièce (20), dans laquelle la première
table porte-pièce (19) est logée de manière pivotante autour d'un premier axe de pivotement (21) qui est orienté parallèlement par rapport à un axe X horizontal (10) et la deuxième table porte-pièce (20) est logée de manière pivotante autour d'un deuxième axe de pivotement (22) qui est orienté parallèlement par rapport à l'axe X (10) **caractérisée en ce que** le dispositif de serrage de pièce (18) comprend au moins une première table porte-pièce arrière (40) et une deuxième table porte-pièce arrière (41),
dans laquelle la première table porte-pièce arrière (40) est logée de manière pivotante autour d'un premier axe de pivotement arrière (42), qui est orienté parallèlement à un axe X horizontal (10) et la deuxième table porte-pièce arrière (41) est logée de manière pivotante autour d'un deuxième axe de pivotement arrière (43), qui est orienté parallèlement à l'axe X (10), et **en ce que** la première table porte-pièce (19) et la deuxième table porte-pièce (20) sont disposées sur un premier côté (38) d'un pont pivotant (37), qui est logé de manière pivotante autour d'un axe de pont pivotant (44) orienté parallèlement à l'axe X (10) et **en ce que** la première table porte-pièce arrière (40) et la deuxième table porte-pièce arrière (41) sont disposées sur un deuxième côté (39) du pont pivotant (37), dans laquelle, selon la position de pivotement du pont pivotant (37)
la première broche de travail (5) correspond à la première table porte-pièce (19) et la deuxième broche de travail (6) correspond à la deuxième table porte-pièce (20) ou la première broche de travail (5) correspond à la première table porte-pièce arrière (40) et la deuxième broche de travail (6) correspond à la deuxième table porte-pièce arrière (41).

2. Procédé de fonctionnement d'une machine-outil (1) avec un bâti de machine (2), une première broche de travail (5), qui est logée de manière rotative autour d'un premier axe de broche (7), au moins une deuxième broche de travail (6) qui est logée de manière rotative autour d'un deuxième axe de broche (8) et un dispositif de serrage de pièce (18) qui est conçu pour le logement d'au moins une première pièce (32) et d'une deuxième pièce (33), dans lequel la première broche de travail (5) et la deuxième broche de travail (6) sont disposées verticalement l'une au-dessus de l'autre, dans lequel le dispositif de serrage de pièce (18) comprend au moins une première table porte-pièce (19) et une deuxième table porte-pièce (20), dans lequel la première table porte-pièce (19) est logée de manière pivotante autour d'un premier axe de pivotement (21) qui est orienté parallèlement par rapport à un axe X horizontal (10) et la deuxième table porte-pièce (20) est logée de manière pivotante autour d'un deuxième axe de pivotement (22) qui est orienté parallèlement par rapport à l'axe X (10)
dans lequel le dispositif de serrage de pièce (18) comprend au moins une première table porte-pièce arrière (40) et une deuxième table porte-pièce arrière (41), dans lequel la première table porte-pièce arrière (40) est logée de manière pivotante autour d'un premier axe de pivotement arrière (42), qui est orienté parallèlement à un axe X horizontal (10) et la deuxième table porte-pièce arrière (41) est logée de manière pivotante autour d'un deuxième axe de pivotement arrière (43), qui est orienté parallèlement à l'axe X (10), et en ce que la première table porte-pièce (19) et la deuxième table porte-pièce (20) sont disposées sur un premier côté (38) d'un pont pivotant (37), qui est logé de manière pivotante autour d'un axe de pont pivotant (44) orienté parallèlement à l'axe X (10) et en ce que la première table porte-pièce arrière (40) et la deuxième table porte-pièce arrière (41) sont disposées sur un deuxième côté (39) du pont pivotant (37), dans lequel, selon la position de pivotement du pont pivotant (37) la première broche de travail (5) correspond à la première table porte-pièce (19) et la deuxième broche de travail (6) correspond à la deuxième table porte-pièce (20) ou la première broche de travail (5) correspond à la première table porte-pièce arrière (40) et la deuxième broche de travail (6) correspond à la deuxième table porte-pièce arrière (41), comprenant les étapes suivantes :
- usinage de la première pièce (32) au moyen de la première broche de travail (5) ;
- usinage de la deuxième pièce (33) au moyen de la deuxième broche de travail (6),
dans lequel l'usinage de la première pièce (32) logée sur la première table porte-pièce (19) et l'usinage de la deuxième pièce (33) logée sur la deuxième table porte-pièce (20) ont lieu simultanément.
